(19) Europäisches Patentamt
European Patent Office
Office européen des brevets

(11) EP 4 059 990 B1

(12) EUROPEAN PATENT SPECIFICATION

(45) Date of publication and mention of the grant of the patent:
**21.02.2024 Bulletin 2024/08**

(21) Application number: **21189443.1**

(22) Date of filing: **03.08.2021**

(51) International Patent Classification (IPC):
***C08G 73/10*** *(2006.01)* ***C08L 79/08*** *(2006.01)*

(52) Cooperative Patent Classification (CPC):
(C-Sets available)
**C08G 73/1028; C08G 73/1067; C08J 9/26; C08L 79/08; C09D 179/08;** C08J 2201/046; C08J 2379/08; C08J 2425/06 (Cont.)

(54) **POLYIMIDE PRECURSOR SOLUTION, METHOD FOR PRODUCING POLYIMIDE PRECURSOR SOLUTION, METHOD FOR PRODUCING POLYIMIDE FILM, AND METHOD FOR PRODUCING POROUS POLYIMIDE FILM**

POLYIMIDVORLÄUFERLÖSUNG, VERFAHREN ZUR HERSTELLUNG DER POLYIMIDVORLÄUFERLÖSUNG, VERFAHREN ZUR HERSTELLUNG EINER POLYIMIDFOLIE UND VERFAHREN ZUR HERSTELLUNG EINER PORÖSEN POLYIMIDFOLIE

SOLUTION DE PRÉCURSEUR DE POLYIMIDE, PROCÉDÉ DE PRODUCTION D’UNE SOLUTION DE PRÉCURSEUR DE POLYIMIDE, PROCÉDÉ DE PRODUCTION DE FILM DE POLYIMIDE ET PROCÉDÉ DE PRODUCTION DE FILM DE POLYIMIDE POREUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2021 JP 2021044520**

(43) Date of publication of application:
**21.09.2022 Bulletin 2022/38**

(73) Proprietor: **Fujifilm Business Innovation Corp.**
**Tokyo (JP)**

(72) Inventors:
- **YOSHIMURA, Kosaku**
**Minamiashigara-shi (JP)**
- **KASHIMA, Yasunobu**
**Minamiashigara-shi (JP)**
- **SUGAHARA, Hajime**
**Minamiashigara-shi (JP)**
- **ISHIZUKA, Takahiro**
**Minamiashigara-shi (JP)**

(74) Representative: **Haseltine Lake Kempner LLP**
**Bürkleinstrasse 10**
**80538 München (DE)**

(56) References cited:
**US-A1- 2014 213 724**
**US-A1- 2016 185 964**
**US-A1- 2018 215 873**
**US-A1- 2021 024 699**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 79/08, C08L 25/06**

## Description

BACKGROUND

Technical Field

The present invention relates to a polyimide precursor solution, a method for producing a polyimide precursor solution, a method for producing a polyimide film, and a method for producing a porous polyimide film.

Related Art

JP-A-2013-144750 proposes "a method for producing a polyimide precursor aqueous solution composition, including using water as a reaction solvent and reacting a tetracarboxylic dianhydride and a diamine having a solubility in water at 25°C of 0.1 g/L or more in the presence of a basic compound (excluding imidazoles) having a pKa of 7.5 or more to produce an aqueous composition of a polyimide precursor".
JP-A-2019-131747 proposes "a porous polyimide film raw fabric having tensile strength of 45 MPa or more specified by ASTM standard D638".
US 2016/185964 A1 relates to a polyimide precursor composition, a polyimide molded article, and a method for preparing a polyimide molded article.
US 2018/215873 A1 relates to a polyimide precursor composition including a solvent including water and a polyimide precursor including a group having a triple bond at a terminal thereof, which is dissolved in the solvent.
US 2021/024699 A1 relates to polyamic acid, polyamic acid solution, polyimide, and polyimide film, plus a laminate and flexible device that includes the polyimide film.
US 2014/213724 A1 relates to a polyimide precursor composition and a method for producing a polyimide precursor composition.

SUMMARY

An object of the present invention is to provide a polyimide precursor solution having a small change in viscosity during storage, as compared with a case where in a polyimide precursor solution containing a polyimide precursor having a weight average molecular weight of 40,000 or more and an aqueous solvent containing a tertiary amine compound and water, the viscosity of the solution after storage at 25°C for 14 days is less than 50% or more than 200% of the viscosity of the solution before storage, or the pH at 50°C is less than 6.5 or 7.5 or more.
The present invention is defined in and by the appended claims.
According to a first aspect of the present invention, there is provided a polyimide precursor solution, containing:

a polyimide precursor having a weight average molecular weight of 40,000 or more; and
an aqueous solvent containing a tertiary amine compound and water, wherein the pH at 50 °C is 6.5 or more and less than 7.5.

Accordingly, there is provided a polyimide precursor solution having a small change in viscosity during storage, as compared with a case where the pH at 50°C is less than 6.5 or 7.5 or more.
Accordingly, there is provided a polyimide precursor solution having a small change in viscosity during storage, as compared with a case where in a polyimide precursor solution containing a polyimide precursor having a weight average molecular weight of 40,000 or more and an aqueous solvent containing a tertiary amine compound and water, the pH at 50°C is less than 6.5 or 7.5 or more.
The pH at 50°C may be 6.8 or more and 7.2 or less.
Accordingly, there is provided a polyimide precursor solution having a small change in viscosity during storage, as compared with a case where the pH at 50°C is less than 6.8 or more than 7.2.
The tertiary amine compound may be at least one selected from the group consisting of an N-substituted imidazole compound and an N-substituted morpholine compound.
The N-substituted imidazole compound may be a 1,2-dimethylimidazole and the N-substituted morpholine compound may be an N-methylmorpholine.
The viscosity of the polyimide precursor solution after a storage at 25°C for 14 days may be 50% or more and 200% or less with respect to a viscosity of the polyimide precursor solution before the storage.
Accordingly, there is provided a polyimide precursor solution having a small change in viscosity during storage, as compared with a case where in a polyimide precursor solution containing a polyimide precursor having a weight average molecular weight of 40,000 or more and an aqueous solvent containing a tertiary amine compound and water,

the viscosity of the solution after storage at 25°C for 14 days is less than 50% or more than 200% of the viscosity of the solution before storage.

The polyimide precursor solution may further contain:

resin particles.

Accordingly, there is provided a polyimide precursor solution containing resin particles and having a small change in viscosity during storage, as compared with a case where in a polyimide precursor solution containing a polyimide precursor having a weight average molecular weight of 40,000 or more and an aqueous solvent containing a tertiary amine compound and water, the pH at 50°C is less than 6.5 or 7.5 or more and optionally the viscosity of the solution after storage at 25°C for 14 days is less than 50% or more than 200% of the viscosity of the solution before storage.

According to a second aspect of the present invention, there is provided a method for producing a polyimide precursor solution, including:

forming a polyimide precursor by polymerizing a tetracarboxylic dianhydride and a diamine compound at a pH of less than 7.5 in the presence of a tertiary amine compound to obtain a solution containing the polyimide precursor; and
adjusting a pH of the solution to 6.5 or more and less than 7.5.

Accordingly, there is provided a method for producing a polyimide precursor solution which can obtain a polyimide precursor solution having a small change in viscosity during storage, as compared with a case where in a method for producing a polyimide precursor solution including a step of forming a polyimide precursor by polymerizing a tetracarboxylic dianhydride and a diamine compound in the presence of a tertiary amine compound to obtain a solution containing the polyimide precursor and a step of adjusting the pH of the solution, the step of forming the polyimide precursor is performed under the condition of a pH of 7.5 or more, or the step of adjusting the pH of the solution is a step of adjusting the pH of the solution to less than 6.5 or 7.5 or more.

According to a third aspect of the present invention, there is provided a method for producing a polyimide film, including:

coating the polyimide precursor solution according to the first aspect of the present invention onto a substrate to form a coating film, and drying the coating film to form a film containing the polyimide precursor; and
heating the film to imidize the polyimide precursor to form the polyimide film.

Accordingly, there is provided a method for producing a polyimide film which can obtain a polyimide film having a good surface shape even when a polyimide precursor solution after storage is used, as compared with a case where, in a method for producing a polyimide film including a first step of coating a polyimide precursor solution onto a substrate to form a coating film, and then drying the coating film to form a film containing the polyimide precursor and the resin particles and a second step of heating the film to imidize the polyimide precursor to form a polyimide film, a polyimide precursor solution containing a polyimide precursor having a weight average molecular weight of 40,000 or more and an aqueous solvent containing a tertiary amine compound and water and having a pH at 50°C of less than 6.5 or 7.5 or more and optionally having a viscosity after storage at 25°C for 14 days of less than 50% or more than 200% of the viscosity of the solution before storage, is used.

According to a fourth aspect of the present invention, there is provided a method for producing a porous polyimide film, including:

coating the polyimide precursor solution according to the first aspect of the present invention and wherein the polyimide precursor solution further comprises resin particles onto a substrate to form a coating film, and drying the coating film to form a film containing the polyimide precursor and the resin particles; and
heating the film to imidize the polyimide precursor to form a polyimide film, and removing the resin particles.

Accordingly, there is provided a method for producing a porous polyimide film which can obtain a porous polyimide film having a good surface shape even when a polyimide precursor solution after storage is used, as compared with a case where, in a method for producing a porous polyimide film including a first step of coating a polyimide precursor solution onto a substrate to form a coating film, and then drying the coating film to form a film containing the polyimide precursor and the resin particles and a second step of heating the film to imidize the polyimide precursor to form a polyimide film, the second step including a treatment of removing the resin particles, a polyimide precursor solution containing a polyimide precursor having a weight average molecular weight of 40,000 or more, an aqueous solvent containing a tertiary amine compound and water, and resin particles and having a pH at 50°C of less than 6.5 or 7.5 or more is used and optionally having a viscosity after storage at 25°C for 14 days of less than 50% or more than 200% of the viscosity of the solution before storage is used.

## BRIEF DESCRIPTION OF THE DRAWINGS

Exemplary embodiment(s) of the present invention will be described in detail based on the following figure, wherein:
FIGURE is a schematic view showing a form of a porous polyimide film according to the present exemplary embodiment.

## DETAILED DESCRIPTION

Hereinafter, an exemplary embodiment as an example of the present invention will be described.
These descriptions and Examples illustrate the exemplary embodiment, and do not limit the scope of the exemplary embodiment.
In the numerical ranges described in stages in the present description, an upper limit or a lower limit described in one numerical range may be replaced with an upper limit or a lower limit of the numerical range described in other stages. Further, in the numerical ranges described in the present description, the upper limit or the lower limit of the numerical range may be replaced with values shown in Examples.
In the present description, the term "step" indicates not only an independent step, and even when a step cannot be clearly distinguished from other steps, this step is included in the term "step" as long as the intended purpose of the step is achieved.
Each component may contain plural corresponding substances.
In a case of referring to an amount of each component in a composition, when there are plural substances corresponding to each component in the composition, unless otherwise specified, it refers to a total amount of the plural substances present in the composition.
In the present exemplary embodiment, the term "film" is a concept that includes not only what is generally called "film" but also what is generally called "sheet".

### <Polyimide Precursor Solution>

A polyimide precursor solution according to a first disclosure which is not claimed contains: a polyimide precursor having a weight average molecular weight of 40,000 or more; and an aqueous solvent containing a tertiary amine compound and water.
A viscosity of the solution after storage at 25°C for 14 days is 50% or more and 200% or less with respect to a viscosity of the solution before storage.
With the above configuration, the polyimide precursor solution according to the first disclosure becomes a polyimide precursor solution having a small change in viscosity during storage. The reasons are presumed as follows.
The polyimide precursor solution containing water tends to have a high surface tension. Therefore, in the production of the polyimide film, when the polyimide precursor solution is coated to form a coating film, cissing may be generated in the coating film or the film thickness of the coating film may become non-uniform.
Examples of eliminating the cissing of the coating film or the non-uniformity of the film thickness of the coating film when the polyimide precursor solution is coated to form the coating film include a method for producing a polyimide film using a polyimide precursor solution containing a high molecular weight polyimide precursor (for example, a polyimide precursor having a weight average molecular weight of 40,000 or more). However, the polyimide precursor solution containing a high molecular weight polyimide precursor may have a large change in viscosity during storage. It is presumed that this is because the polyimide precursor is partially imidized or the polyimide precursor is hydrolyzed during the storage.
The polyimide precursor solution according to the first disclosure has a viscosity after storage at 25°C for 14 days of 50% or more and 200% or less with respect to the viscosity of the solution before storage. This means that even when the polyimide precursor solution is stored, the change in viscosity of the polyimide precursor solution is small.
Therefore, it is presumed that the polyimide precursor solution according to the first disclosure becomes a polyimide precursor solution having a small change in viscosity during storage.
A polyimide precursor solution according to a first exemplary embodiment contains: a polyimide precursor having a weight average molecular weight of 40,000 or more; and an aqueous solvent containing a tertiary amine compound and water.
The pH at 50°C of the polyimide precursor solution is 6.5 or more and less than 7.5.
Optionally, the viscosity of the polyimide precursor solution after a storage at 25°C for 14 days is 50% or more and 200% or less with respect to the viscosity of the polyimide precursor solution before the storage.
With the above configuration, the polyimide precursor solution according to the first exemplary embodiment becomes a polyimide precursor solution having a small change in viscosity during storage. The reasons are presumed as follows.

The polyimide precursor solution according to the first exemplary embodiment has a pH at 50°C of 6.5 or more. When the pH is within the above range, the carboxyl group of the polyimide precursor contained in the polyimide precursor solution has a high proportion of forming a salt. Therefore, the progress of imidization of the polyimide precursor during storage is prevented. Therefore, an increase in viscosity of the polyimide precursor solution during storage is prevented.

In addition, the pH at 50°C of the polyimide precursor solution is less than 7.5. When the pH is within the above range, the liquid property of the polyimide precursor solution is near neutrality. Since the hydrolysis of the polyimide precursor is promoted under strongly basic condition, when the pH at 50°C is set to less than 7.5, the hydrolysis of the polyimide precursor during storage is prevented. Therefore, a decrease in viscosity of the polyimide precursor solution during storage is prevented.

Therefore, it is presumed that the polyimide precursor solution according to the first exemplary embodiment becomes a polyimide precursor solution having a small change in viscosity during storage.

Hereinafter, the polyimide precursor solution corresponding to any of the polyimide precursor solutions according to the first disclosure or first exemplary embodiment (hereinafter, also referred to as "polyimide precursor solution according to the present exemplary embodiment") will be described in detail. However, an example of the polyimide precursor solution of the present invention may be any polyimide precursor solutions corresponding to any one of the polyimide precursor solutions according to the first exemplary embodiment.

(Polyimide Precursor)

The polyimide precursor is obtained by polymerizing a tetracarboxylic dianhydride and a diamine compound. Specifically, the polyimide precursor is a resin (that is, polyamic acid) having a repeating unit represented by the general formula (I).

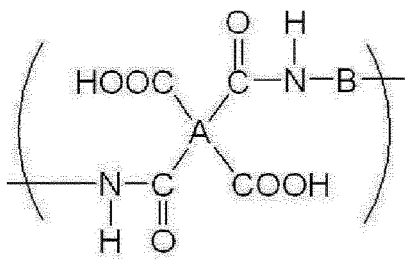

(I)

In the general formula (I), A represents a tetravalent organic group and B represents a divalent organic group.

Here, in the general formula (I), the tetravalent organic group represented by A is a residue obtained by removing four carboxyl groups from a tetracarboxylic dianhydride as a raw material.

On the other hand, the divalent organic group represented by B is a residue obtained by removing two amino groups from a diamine compound as a raw material.

That is, the polyimide precursor having a repeating unit represented by the general formula (I) is a polymer of a tetracarboxylic dianhydride and a diamine compound.

Examples of the tetracarboxylic dianhydride include both aromatic and aliphatic tetracarboxylic dianhydrides, and the aromatic tetracarboxylic dianhydride is preferred. That is, in the general formula (I), the tetravalent organic group represented by A is preferably an aromatic organic group.

Examples of the aromatic tetracarboxylic dianhydride include pyromellitic dianhydride, 3,3',4,4'-benzophenone tetracarboxylic dianhydride, 3,3',4,4'-diphenylsulfonetetracarboxylic dianhydride, 4,4'-oxydiphthalic anhydride, 3,4'-oxydiphthalic anhydride, 3,3',4,4'-biphenyltetracarboxylic dianhydride, 2,3,3',4'-biphenyltetracarboxylic dianhydride, 4,4'-(hexafluoroisopropylidene)diphthalic anhydride, 2,2-bis(3,4-dicarboxyphenyl)propane dianhydride, bis(3,4-dicarboxyphenyl)methane dianhydride, 1,4-bis(3,4-dicarboxyphenoxy)benzene dianhydride, 1,4-bis(2,3-dicarboxyphenoxy)benzene dianhydride, p-phenylenebis(trimellitate anhydride), m-phenylenebis(trimellitate anhydride), 2,2-bis[4-(3,4-dicarboxyphenoxy)phenyl]propane dianhydride, naphthalene-1,4,5,8-tetracarboxylic dianhydride, naphthalene-2,3,6,7-tetracarboxylic dianhydride, 9,9-bis(3,4-dicarboxyphenyl)fluorene dianhydride, 4,4'-diphenyl ether bis(trimellitate anhydride), 4,4'-diphenylmethanebis(trimellitate anhydride), 4,4'-bis(3,4-dicarboxyphenoxy)diphenylsulfide dianhydride, 4,4'-bis(3,4-dicarboxyphenoxy)diphenylsulfone dianhydride, 4,4'-bis(3,4-dicarboxyphenoxy) diphenyl ether dianhydride, 2,2-bis(4-hydroxyphenyl) propanebis(trimellitate anhydride), p-terphenyltetracarboxylic dianhydride, and m-terphenyltetracarboxylic dianhydride.

Examples of the aliphatic tetracarboxylic dianhydride include: aliphatic or alicyclic tetracarboxylic dianhydrides

such as butanetetracarboxylic dianhydride, 1,2,3,4-cyclobutanetetracarboxylic dianhydride, 1,3-dimethyl-1,2,3,4-cyclobutanetetracarboxylic dianhydride, 1,2,3,4-cyclopentanetetracarboxylic dianhydride, 2,3,5-tricarboxycyclopentyl acetate dianhydride, 3,5,6-tricarboxynorbonan-2-acetate dianhydride, 2,3,4,5-tetrahydrofuran tetracarboxylic dianhydride, 5-(2,5-dioxotetrahydrofuryl)-3-methyl-3-cyclohexene-1,2-dicarboxylic dianhydride, and bicyclo[2,2,2]-octo-7-ene-2,3,5,6-tetracarboxylic dianhydride; and aliphatic tetracarboxylic dianhydrides having an aromatic ring such as 1,3,3a,4,5,9b-hexahydro-5-(tetrahydro -2,5-dioxo-3-franyl)-naphtho[1,2-c]furan-1,3-dione, 1,3,3a,4,5,9b-hexahydro-5-methyl-5-(tetrahydro-2,5-dioxo-3-franyl)-naphtho[1,2-c]furan-1,3-dione, and 1,3,3a,4,5,9b-hexahydro-8-methyl-5-(tetrahydro-2,5-dioxo-3-franyl)-naphtho[1,2-c]furan-1,3-dione.

Among these, the tetracarboxylic dianhydride is preferably an aromatic tetracarboxylic dianhydride. Specifically, preferred are pyromellitic dianhydride, 3,3',4,4'-benzophenone tetracarboxylic dianhydride, 4,4'-oxydiphthalic anhydride, 3,3', 4,4'-biphenyltetracarboxylic dianhydride, and 2,3,3',4'-biphenyltetracarboxylic dianhydride, more preferred are pyromellitic dianhydride, 3,3',4,4'-biphenyltetracarboxylic dianhydride, and 3,3',4,4'-benzophenone tetracarboxylic dianhydride, and particularly preferred is 3,3',4,4'-biphenyltetracarboxylic dianhydride.

The tetracarboxylic dianhydride may be used alone or in combination of two or more thereof.

When two or more tetracarboxylic dianhydrides are used in combination, aromatic tetracarboxylic dianhydrides or aliphatic tetracarboxylic dianhydrides may be used in combination, or an aromatic tetracarboxylic dianhydride and an aliphatic tetracarboxylic dianhydride may be used in combination.

On the other hand, the diamine compound is a diamine compound having two amino groups in the molecular structure thereof. Examples of the diamine compound include both aromatic and aliphatic diamine compounds, and the aromatic diamine compound is preferred. That is, in the general formula (I), the divalent organic group represented by B is preferably an aromatic organic group.

Examples of the diamine compound include: aromatic diamines such as p-phenylenediamine, m-phenylenediamine, 4,4'-diaminodiphenylmethane, 4,4'-diaminodiphenylethane, 4,4'-diaminodiphenyl ether, 4,4'-diaminodiphenyl sulfide, 4,4'-diaminodiphenyl sulfone, 1,5-diaminonaphthalene, 3,3-dimethyl-4,4'-diaminobiphenyl, 5-amino-1-(4'-aminophenyl)-1,3,3-trimethylindane, 6-amino-1- (4'-aminophenyl)-1,3,3-trimethylindane, 4,4'-diaminobenzanilide, 3,5-diamino-3'-trifluoromethylbenzanilide, 3,5-diamino-4'-trifluoromethylbenzanilide, 3,4'-diaminodiphenyl ether, 2,7-diaminofluorene, 2,2-bis(4-aminophenyl)hexafluoropropane, 4,4'-methylene-bis (2-chloroaniline), 2,2',5,5'-tetrachloro-4,4'-diaminobiphenyl, 2,2'-dichloro-4,4'-diamino-5,5'-dimethoxybiphenyl, 3,3'-dimethoxy-4,4'-diaminobiphenyl, 4,4'-diamino-2,2'-bis(trifluoromethyl)biphenyl, 2,2-bis[4-(4-aminophenoxy) phenyl] propane, 2,2-bis[4-(4-aminophenoxy) phenyl]hexafluoropropane, 1,4-bis (4-aminophenoxy)benzene, 4,4'-bis(4-aminophenoxy)-biphenyl, 1,3'-bis (4-aminophenoxy) benzene, 9,9-bis(4-aminophenyl)fluorene, 4,4'-(p-phenylene isopropylidene)bisaniline, 4,4'-(m-phenylene isopropylidene)bisaniline, 2,2'-bis[4-(4-amino-2-trifluoromethylphenoxy)phenyl]hexafluoropropane, and 4,4'-bis[4-(4-amino-2-trifluoromethyl)phenoxy]-octafluorobiphenyl; aromatic diamines having two amino groups bonded to an aromatic ring and a hetero atom other than the nitrogen atom of the amino groups, such as diaminotetraphenylthiophene; and aliphatic diamines and alicyclic diamines such as 1,1-methaxylylenediamine, 1,3-propane diamine, tetramethyldiamine, pentamethylenediamine, octamethylenediamine, nonamethylenediamine, 4,4-diaminoheptamethylenediamine, 1,4-diaminocyclohexane, isophorone diamine, tetrahydrodicyclopentadienylenediamine, hexahydro-4,7-methanoindanylene dimethylenediamine, tricyclo[6,2,1,$0^{2-7}$]-undecylenic dimethyldiamine, and 4,4'-methylenebis(cyclohexylamine).

Among these, the diamine compound is preferably an aromatic diamine compound. Specifically, preferred are p-phenylenediamine, m-phenylenediamine, 4,4'-diaminodiphenylmethane, 4,4'-diaminodiphenyl ether, 3,4'-diaminodiphenyl ether, 4,4'-diaminodiphenyl sulfide, and 4,4'-diaminodiphenyl sulfone, and particularly preferred are 4,4'-diaminodiphenyl ether and p-phenylenediamine.

The diamine compound may be used alone or in combination of two or more thereof. When two or more diamine compounds are used in combination, aromatic diamine compounds or aliphatic diamine compounds may be used in combination, or an aromatic diamine compound and an aliphatic diamine compound may be used in combination.

Further, in order to adjust the handleability and mechanical characteristics of the obtained polyimide, it may be preferable to perform copolymerization using two or more kinds of tetracarboxylic dianhydrides and/or diamine compounds.

Examples of a combination of copolymerization include copolymerization of a tetracarboxylic dianhydride and/or a diamine compound having one aromatic ring in the chemical structure with a tetracarboxylic dianhydride and/or a diamine compound having two or more aromatic rings in the chemical structure, or copolymerization of an aromatic tetracarboxylic dianhydride and/or diamine compound with a carboxylic acid dianhydride and/or a diamine compound having flexible linking groups such as an alkylene group, an alkyleneoxy group, and a siloxane group.

The weight average molecular weight of the polyimide precursor is 40,000 or more.

From the viewpoint of obtaining a polyimide film having a good surface shape, the weight average molecular weight of the polyimide precursor is preferably 42,000 or more and 60,000 or less, more preferably 44,000 or more and 58,000 or less, and still more preferably 46,000 or more and 56,000 or less.

The weight average molecular weight of the polyimide precursor is measured by a gel permeation chromatography (GPC) method under the following measurement conditions.

- Column: Tosoh TSKgelα-M (7.8 mm I.D × 30 cm)
- Eluent: DMF (dimethylformamide)/30 mM LiBr/60 mM phosphoric acid
- Flow rate: 0.6 mL/min
- Injection amount: 60 μL
- Detector: RI (Differential refractometer)

The content (that is, concentration) of the polyimide precursor is preferably 0.1 mass% or more and 40 mass% or less, more preferably 0.5 mass% or more and 25 mass% or less, and still more preferably 1 mass% or more and 20 mass% or less, with respect to the entire polyimide precursor solution.

(Aqueous Solvent)

The aqueous solvent contains a tertiary amine compound and water.

-Tertiary Amine Compound-

The tertiary amine compound enhances the solubility of the polyimide precursor in water, and further has a catalytic action when the polyimide precursor is imidized (that is, dehydrated and ring-closed) to form a polyimide. Therefore, a dried film of the polyimide precursor and a polyimide film having high strength can be obtained.

Here, examples of the tertiary amine compound include an acyclic amine compound and a cyclic amine compound.

Examples of the acyclic amine compound include a trialkylamine (a tertiary amine compound having an alkyl group), and a tertiary aminoalcohol (a tertiary amine compound having an alkyl chain and a hydroxy group).

Examples of the cyclic amine compound include N-substituted piperazine (amine compound having a piperazine skeleton), N-substituted morpholine (amine compound having a morpholine skeleton), isoquinolins (amine compound having an isoquinolin skeleton), pyridines (amine compound having a pyridine skeleton), pyrimidines (amine compound having a pyrimidine skeleton), pyrazines (amine compound having a pyrazine skeleton), triazines (amine compound having a triazine skeleton), N-substituted imidazoles (amine compound having an imidazole skeleton), and polypyridine.

The number of the carbon atoms of the acyclic amine compound is not particularly limited, and is preferably 3 or more and 18 or less, more preferably 3 or more and 15 or less, and still more preferably 3 or more and 12 or less.

The number of the carbon atoms of the cyclic amine compound is not particularly limited, and is preferably 3 or more and 10 or less, more preferably 3 or more and 9 or less, and still more preferably 3 or more and 8 or less.

From the viewpoint of obtaining a polyimide precursor solution having a smaller change in viscosity during storage, the tertiary amine compound is preferably at least one selected from the group consisting of an N-substituted imidazole compound and an N-substituted morpholine compound.

A polyimide precursor solution containing, as a tertiary amine compound, at least one selected from the group consisting of an N-substituted imidazole compound and an N-substituted morpholine compound is more likely to prevent a change in pH of the solution. Specifically, the pH at 50°C of the polyimide precursor solution tends to be in the range of 6.5 or more and less than 7.5. Therefore, a polyimide precursor solution having a smaller change in viscosity during storage is easily obtained.

From the viewpoint of obtaining a polyimide precursor solution having a smaller change in viscosity during storage, the tertiary amine compound is preferably at least one selected from the group consisting of 1,2-dimethylimidazole and N-methylmorpholine.

The substituent of the N-substituted morpholine is preferably an alkyl group.

The number of the carbon atoms of the alkyl group is preferably 1 or more and 6 or less, more preferably 1 or more and 5 or less, and still more preferably 1 or more and 4 or less.

Specific examples of the N-substituted morpholine include N-methylmorpholine, N-ethylmorpholine, N-propylmorpholine, and N-butylmorpholine.

The number of the carbon atoms of the alkyl group of the trialkylamine is preferably 1 or more and 6 or less, more preferably 1 or more and 5 or less, and still more preferably 1 or more and 4 or less.

Specific examples of the trialkylamine include triethylamine, trimethylamine, N,N-dimethylethylamine, N,N-dimethylpropylamine, N,N-dimethylbutylamine, N,N-diethylmethylamine, N,N-dipropylethylamine, and N,N-dimethylisopropylamine.

The number of the carbon atoms of the alcohol of the tertiary aminoalcohol is preferably 1 or more and 6 or less, more preferably 1 or more and 5 or less, and still more preferably 1 or more and 4 or less.

When the tertiary aminoalcohol has an alkyl group, the carbon atoms of the alkyl group is preferably 1 or more

and 6 or less, more preferably 1 or more and 5 or less, and still more preferably 1 or more and 4 or less.

Specific examples of the tertiary aminoalcohol include N,N-dimethylethanolamine, N,N-dimethylpropanolamine, N,N-dimethylisopropanolamine, N,N-diethylethanolamine, N-ethyldiethanolamine, N-methyldiethanolamine, triethanolamine, and triisopropanolamine.

The substituent of the N-substituted imidazole is preferably an alkyl group.

The number of the carbon atoms of the alkyl group is preferably 1 or more and 6 or less, more preferably 1 or more and 5 or less, and still more preferably 1 or more and 4 or less.

Specific examples of the N-substituted imidazole include 1-methylimidazole, 1-ethylimidazole, and 1,2-dimethylimidazole.

The above tertiary amine compound may be used alone or in combination of two or more thereof.

The content of the tertiary amine compound contained in the polyimide precursor solution according to the present exemplary embodiment is preferably 1 mass% or more and 50 mass% or less, more preferably 2 mass% or more and 30 mass% or less, and still more preferably 3 mass% or more and 20 mass% or less, with respect to the total mass of the aqueous solvent contained in the polyimide precursor solution.

-Water-

The aqueous solvent for use in the present exemplary embodiment contains water.

Examples of water include distilled water, ion-exchanged water, ultrafiltered water, and pure water.

The content of the water for use in the present exemplary embodiment is preferably 50 mass% or more and 99 mass% or less, more preferably 70 mass% or more and 97 mass% or less, and still more preferably 80 mass% or more and 96 mass% or less, with respect to the total mass of the aqueous solvent contained in the polyimide precursor solution.

The content of the aqueous solvent contained in the polyimide precursor solution according to the present exemplary embodiment is generally 60 mass% or more and 99.9 mass% or less, and preferably 75 mass% or more and 99 mass% or less, with respect to the total mass of the polyimide precursor solution.

-Solvent Other Than Water-

The aqueous solvent may contain a solvent other than water.

When the aqueous solvent contains a solvent other than water, examples of the solvent other than water include a water-soluble organic solvent and an aprotic polar solvent. The solvent other than water is preferably a water-soluble organic solvent from the viewpoint of transparency, mechanical strength and the like of a polyimide molded body. In particular, from the viewpoint of improving various properties of the polyimide molded body such as heat resistance, electrical properties, and solvent resistance, in addition to transparency and mechanical strength, the aqueous solvent may not contain an aprotic polar solvent, or may contain an aprotic polar solvent in a small amount (for example, 40 mass% or less, preferably 30 mass% or less) with respect to the total aqueous solvent. Here, the "water-soluble" means that the target substance dissolves in water in an amount of 1 mass% or more at 25°C.

The water-soluble organic solvent may be used alone or in combination of two or more thereof.

The water-soluble organic solvent is preferably one in which particles described below do not dissolve. The reason is that, for example, when an aqueous solvent containing water and a water-soluble organic solvent is used, there is a concern that particles are dissolved in the process of film formation even when the particles are not dissolved in a particle dispersion liquid.

The water-soluble ether-based solvent is a water-soluble solvent having an ether bond in one molecule. Examples of the water-soluble ether-based solvent include tetrahydrofuran (THF), dioxane, trioxane, 1,2-dimethoxyethane, diethylene glycol dimethyl ether, and diethylene glycol diethyl ether. Among these, the water-soluble ether-based solvent is preferably tetrahydrofuran and dioxane.

The water-soluble ketone-based solvent is a water-soluble solvent having a ketone group in one molecule. Examples of the water-soluble ketone-based solvent include acetone, methyl ethyl ketone, and cyclohexanone. Among these, the water-soluble ketone-based solvent is preferably acetone.

The water-soluble alcohol-based solvent is a water-soluble solvent having an alcoholic hydroxy group in one molecule. Examples of the water-soluble alcohol solvent include methanol, ethanol, 1-propanol, 2-propanol, tert-butyl alcohol, ethylene glycol, ethylene glycol monoalkyl ether, propylene glycol, propylene glycol monoalkyl ether, diethylene glycol, diethylene glycol monoalkyl ether, 1,2-propanediol, 1,3-propanediol, 1,3-butanediol, 1,4-butanediol, 2,3-butanediol, 1,5-pentanediol, 2-butene-1,4-diol, 2-methyl-2,4-pentanediol, glycerin, 2-ethyl-2-hydroxymethyl-1,3-propanediol, and 1,2,6-hexanetriol. Among these, the water-soluble alcohol solvent is preferably methanol, ethanol, 2-propanol, ethylene glycol, ethylene glycol monoalkyl ether, propylene glycol, propylene glycol monoalkyl ether, diethylene glycol, and diethylene glycol monoalkyl ether.

When an aprotic polar solvent other than water is contained as the aqueous solvent, the aprotic polar solvent used together is a solvent having a boiling point of 150°C or higher and 300°C or lower and a dipole moment of 3.0 D or more and 5.0 D or less. Examples of the aprotic polar solvent include N-methyl-2-pyrrolidone (NMP), N,N-dimethylformamide (DMF), N,N-dimethylacetamide (DMAc), dimethyl sulfoxide (DMSO), hexamethylenephosphoramide (HMPA), N-methylcaprolactam, N-acetyl-2-pyrrolidone, 1,3-dimethyl-2-imidazolidinone (DMI), N,N'-dimethylpropylene urea, tetramethylurea, trimethyl phosphate, and triethyl phosphate.

When a solvent other than water is contained as the aqueous solvent, the solvent used together preferably has a boiling point of 270°C or lower, more preferably 60°C or higher and 250°C or lower, and still more preferably 80°C or higher and 230°C or lower. When the boiling point of the solvent used together is within the above range, the solvent other than water is less likely to remain on the polyimide molded body, and a polyimide film having high mechanical strength is easily obtained.

Here, the range in which the polyimide precursor is dissolved in the solvent is controlled by the content of water and the type and amount of the tertiary amine compound. In the range in which the content of water is small, the polyimide precursor is easily dissolved in a region where the content of the tertiary amine compound is small. On the contrary, in the range in which the content of water is large, the polyimide precursor is easily dissolved in a region where the content of the tertiary amine compound is large. When the tertiary amine compound has high hydrophilicity such as having a hydroxy group, the polyimide precursor is easily dissolved in a region where the content of water is large.

(Particles)

The polyimide precursor solution according to the present exemplary embodiment may contain particles.

The particles refer to those in a dispersed state without being dissolved.

The particles may be any particles that do not dissolve in the polyimide precursor solution according to the present exemplary embodiment, and the material of the particles is not particularly limited, and the particles are roughly classified into resin particles and inorganic particles, which will be described later.

Here, from the viewpoint of preparing a polyimide precursor solution having a small change in viscosity during storage, resin particles are preferred as the particles.

Here, in the present exemplary embodiment, the expression "the particles are not dissolved" means that the particles are not dissolved in a target liquid (specifically, the aqueous solvent contained in the polyimide precursor solution) at 25°C, and that the particles are dissolved in the range of 3 mass% or less with respect to the target liquid.

The particles may remain contained in a polyimide film produced by using the polyimide precursor solution according to the present exemplary embodiment, or may be removed from the produced polyimide film.

The volume average particle diameter D50v of the particles is not particularly limited. The volume average particle diameter D50v of the particles is preferably 0.1 μm or more and 10 μm or less, for example. The lower limit of the volume average particle diameter D50v of the particles is preferably 0.2 μm or more, more preferably 0.3 μm or more, still more preferably 0.4 μm or more, and particularly preferably 0.5 μm or more. In addition, the upper limit of the volume average particle diameter D50v of the particles is preferably 7 μm or less, more preferably 5 μm or less, still more preferably 3 μm or less, and particularly preferably 2 μm or less.

The volume particle size distribution index (GSDv) of the particles is preferably 1.30 or less, more preferably 1.25 or less, and most preferably 1.20 or less.

The particle size distribution of the particles in the polyimide precursor solution according to the present exemplary embodiment is measured by the following method.

The composition to be measured is diluted and the particle size distribution of particles in the liquid is measured using a Coulter counter LS13 (manufactured by Beckman Coulter). Based on the measured particle size distribution, the particle size distribution is measured by drawing a volume cumulative distribution from the small diameter side with respect to the divided particle size range (so-called channel).

Then, in the volume cumulative distribution drawn from the small diameter side, the particle diameter corresponding to the cumulative percentage of 16% is the volume particle diameter D16v, the particle diameter corresponding to the cumulative percentage of 50% is the volume average particle diameter D50v, and the particle diameter corresponding to the cumulative percentage of 84% is the volume particle diameter D84v.

Then, the volume particle size distribution index (GSDv) of the particles is calculated as $(D84v/D16v)^{1/2}$ from the particle size distribution obtained by the above method.

When the particle size distribution of the particles in the polyimide precursor solution according to the present exemplary embodiment is difficult to measure by the above method, it may be measured by a method such as a dynamic light scattering method.

The shape of the particles is preferably spherical.

When the spherical particles are used and the spherical particles are removed from the polyimide film to prepare a porous polyimide film, a porous polyimide film having spherical pores is obtained.

In the present exemplary embodiment, the "spherical" in particles includes both a spherical shape and a substantially spherical shape (that is, a shape close to a spherical shape).

The "spherical" specifically means that particles having a ratio major axis/minor axis of major axis to minor axis of 1 or more and less than 1.5 is present in a ratio of more than 80%. The ratio of particles having a ratio major axis/minor axis of major axis to minor axis of 1 or more and less than 1.5 is preferably 90% or more. The closer the ratio of major axis to minor axis is 1, the closer the particle becomes to a spherical shape.

As the particles, either resin particles or inorganic particles may be used, and for example, it is preferable to use resin particles for the following reasons.

Since both the resin particles and the polyimide precursor are organic materials, the particle dispersibility in the coating film by the polyimide precursor solution, the interfacial adhesion with the polyimide precursor, etc. are improved as compared with the case where the inorganic particles are used. In an imidization step when producing the polyimide film, since the resin particles easily absorb the volume shrinkage, it is easy to prevent cracks generated in the polyimide film due to the volume shrinkage.

Hereinafter, specific materials of the resin particles and the inorganic particles will be described.

(Resin Particles)

The resin particles are not particularly limited as long as they do not dissolve in the polyimide precursor solution (specifically, the aqueous solvent contained in the polyimide precursor solution). It is preferable that the resin particles are made of a resin other than polyimide.

Specific examples of the resin particles include resin particles such as: polystyrenes; poly(meth)acrylic acids; vinyl-based resins represented by polyvinyl acetate, polyvinyl alcohol, polyvinyl butyral, polyvinyl ether, etc.; condensation resins represented by polyesters, polyurethanes, polyamides, etc.; hydrocarbon-based resins represented by polyethylene, polypropylene, polybutadiene, etc.; and fluorine-based resins represented by polytetrafluoroethylene, polyvinyl fluoride, etc.

Here, "(meth)acrylic" means to include both "acrylic" and "methacrylic". In addition, (meta)acrylic acids include (meth)acrylic acid, (meth)acrylic acid ester, and (meth)acrylamide.

Further, the resin particles may or may not be cross-linked.

When the resin particles are resin particles made of a vinyl-based resin, the resin particles is obtained by addition polymerization of a monomer.

Examples of the monomer for obtaining a vinyl-based resin include: styrenes having a styrene skeleton, such as styrene, alkyl-substituted styrene (for example, α-methylstyrene, 2-methylstyrene, 3-methylstyrene, 4-methylstyrene, 2-ethylstyrene, 3-ethylstyrene, and 4-ethylstyrene), halogen-substituted styrene (for example, 2-chlorostyrene, 3-chlorostyrene, and 4-chlorostyrene), and vinyl naphthalene; (meta)acrylic acid esters such as methyl (meth)acrylate, ethyl (meth)acrylate, n-propyl (meth)acrylate, n-butyl (meth)acrylate, lauryl (meth)acrylate, 2-ethylhexyl (meth)acrylate; vinyl nitriles such as acrylonitrile and methacrylonitrile; vinyl ethers such as vinyl methyl ether and vinyl isobutyl ether; vinyl ketones such as vinyl methyl ketone, vinyl ethyl ketone, and vinyl isopropenyl ketone; acids such as (meth)acrylic acid, maleic acid, cinnamic acid, fumaric acid, and vinyl sulfonic acid; and bases such as ethyleneimine, vinylpyridine, and vinylamine.

The vinyl-based resin may be a resin obtained by using these monomers alone, or a resin which is a copolymer obtained by using two or more of these monomers.

As other monomers, a monofunctional monomer such as vinyl acetate, a bifunctional monomer such as divinylbenzene, ethylene glycol dimethacrylate, nonane diacrylate, and decanediol diacrylate, and a polyfunctional monomer such as trimethylolpropane triacrylate and trimethylolpropane trimethacrylate may be used in combination.

When a bifunctional monomer and a polyfunctional monomer are used in combination, cross-linked resin particles are obtained.

The resin particles are preferably resin particles made of polystyrenes, poly(meth)acrylic acids or polyesters, and more preferably resin particles made of polystyrenes, a styrene-(meth)acrylic acid copolymer or poly(meth)acrylic acids, from the viewpoints of manufacturability and adaptability of a particle removal step to be described later.

Here, the polystyrenes are resins having a structural unit derived from a styrene-based monomer (that is, a monomer having a styrene skeleton). More specifically, the polystyrenes contain the structural unit in a ratio of preferably 30 mol% or more, and more preferably 50 mol% or more, when the total amount of structural units constituting the resin is 100 mol%.

The poly(meth)acrylic acids mean methacrylic resins and acrylic resins, and are resins having a structural unit derived from a (meth)acrylic monomer (that is, a monomer having a (meth)acryloyl skeleton). More specifically, the poly(meth)acrylic acids contain, for example, structural units derived from (meth)acrylic acid and/or structural units derived from (meth)acrylic acid ester in a total ratio of preferably 30 mol% or more, and more preferably 50 mol% or more, when the total composition in the polymer is 100 mol%.

Further, polyesters are resins obtained by polycondensing a polycarboxylic acid and a polyhydric alcohol and having an ester bond in the main chain.

From the viewpoint of being easy to prevent the movement of particles due to a small difference in specific gravity with the liquid, the resin particles are preferably resin particles made of a resin having a structural unit derived from styrene, and contain the structural unit derived from styrene preferably in a ratio of 30 mol% or more, more preferably 50 mol% or more, still more preferably 80 mol% or more, and particularly preferably 100 mol%, when the total amount of the structural units constituting the resin is 100 mol%.

These resin particles may be used alone or in combination of two or more thereof.

The resin particles preferably maintain the particle shape during the process of producing the polyimide precursor solution according to the present exemplary embodiment, the coating of the polyimide precursor solution according to the present exemplary embodiment when producing the polyimide film, and the process of drying the coating film (before removing the resin particles). From these viewpoints, the glass transition temperature of the resin particles is preferably 60°C or higher, more preferably 70°C or higher, and still more preferably 80°C or higher.

The glass transition temperature is obtained from a DSC curve obtained by differential scanning calorimetry (DSC), and is more specifically obtained by the "extrapolated glass transition onset temperature" described in JIS K 7121:1987 "Method for measuring glass transition temperature of plastics", which is a method for obtaining the glass transition temperature.

(Inorganic Particles)

Specific examples of the inorganic particles include silica (silicon dioxide) particles, magnesium oxide particles, alumina particles, zirconia particles, calcium carbonate particles, calcium oxide particles, titanium dioxide particles, zinc oxide particles, and cerium oxide particles.

As described above, the shape of the particles is preferably spherical. From this viewpoint, the inorganic particles are preferably silica particles, magnesium oxide particles, calcium carbonate particles, titanium dioxide particles, and alumina particles, more preferably silica particles, titanium dioxide particles, and alumina particles, and still more preferably silica particles.

These inorganic particles may be used alone or in combination of two or more thereof.

When the wettability and dispersibility of the inorganic particles in the solvent of the polyimide precursor solution according to the present exemplary embodiment are insufficient, the surface of the inorganic particles may be modified if necessary.

Examples of a surface modification method for the inorganic particles include a method of treating with an alkoxysilane having an organic group represented by a silane coupling agent, and a method of coating with organic acids such as oxalic acid, citric acid and lactic acid.

The content of the particles may be determined according to the application of the polyimide film, and is preferably 0.1 mass% or more and 20 mass% or less, more preferably 0.5 mass% or more and 20 mass% or less, and still more preferably 1 mass% or more and 20 mass% or less, with respect to the total mass of the polyimide precursor solution according to the present exemplary embodiment.

When the content of the particles is within such a range, it is easy to obtain a porous polyimide film having a high porosity while maintaining mechanical strength. A porous polyimide film having high mechanical strength and a high porosity is useful as a separator for a secondary battery.

-Other Components-

The polyimide precursor solution according to the present exemplary embodiment may contain a catalyst for promoting an imidization reaction, a leveling material for improving the quality of film formation, and the like.

As the catalyst for promoting the imidization reaction, a dehydrating agent such as an acid anhydride, an acid catalyst such as a phenol derivative, a sulfonic acid derivative, or a benzoic acid derivative may be used.

In addition, the polyimide precursor solution may contain a conductive material (specifically, a conductive material (for example, having a volume resistivity of less than $10^7$ $\Omega$·cm) or a semi-conductive material (for example, having a volume resistivity of $10^7$ $\Omega$·cm or more and $10^{13}$ $\Omega$·cm or less)) as a conductive agent added for imparting conductivity, for example, depending on the intended use of the porous polyimide film.

Examples of the conductive agent include: carbon black (for example, acidic carbon black having a pH of 5.0 or less); metals (for example, aluminum or nickel); metal oxides (for example, yttrium oxide or tin oxide); and ionic conductive materials (for example, potassium titanate or LiCl). The conductive materials may be used alone or in combination of two or more thereof.

Further, the polyimide precursor solution may contain inorganic particles added for improving mechanical strength, depending on the intended use of the porous polyimide film. Examples of the inorganic particles include

particulate materials such as silica powder, alumina powder, barium sulfate powder, titanium oxide powder, mica, and talc. Further, $LiCoO_2$, $LiMn_2O$ and the like used as electrodes of a lithium ion battery may be contained.

(Viscosity of Solution after Storage at 25°C for 14 Days)

The polyimide precursor solution according to the present exemplary embodiment may have a viscosity after storage at 25°C for 14 days of 50% or more and 200% or less with respect to the viscosity of the solution before storage.

From the viewpoint of obtaining a polyimide precursor solution having a smaller change in viscosity during storage, the viscosity of the solution after storage at 25°C for 14 days is preferably 60% or more and 190% or less, more preferably 70% or more and 180% or less, and still more preferably 80% or more and 170% or less, with respect to the viscosity of the solution before storage.

The viscosity of the solution after storage at 25°C for 14 days with respect to the viscosity of the solution before storage is measured as follows.

First, the viscosity of the polyimide precursor solution before storage is measured. Then, the polyimide precursor solution is stored in a sealed state under a temperature condition of 25°C for 14 days, and the viscosity of the polyimide precursor solution after storage is measured. The solution after storage at 25°C for 14 days with respect to the viscosity of the solution before storage is calculated by calculating the ratio of the viscosity of the polyimide precursor solution after storage when the viscosity of the polyimide precursor solution before storage is 100.

Here, the viscosity of the polyimide precursor solution is a value calculated using an E-type viscometer (for example, TV-35 type manufactured by Toki Sangyo Co., Ltd.). The conditions for measuring viscosity using an E-type viscometer are as follows. E-type viscometer: TV-35 type; rotor: No. 4 (3° × R14), manufactured by Toki Sangyo Co., Ltd.; rotation speed: 10 rpm; measuring temperature: 50°C

(pH)

The polyimide precursor solution according to the present exemplary embodiment has a pH at 50°C of 6.5 or more and less than 7.5.

From the viewpoint of obtaining a polyimide precursor solution having a smaller change in viscosity during storage, the pH at 50°C of the polyimide precursor solution is preferably 6.8 or more and 7.2 or less, more preferably 6.9 or more and 7.1 or less, and still more preferably 7.0.

When the pH of the polyimide precursor solution is within the above numerical range, a polyimide precursor solution having a smaller change in viscosity during storage is easily obtained.

The reasons are presumed as follows.

As the pH at 50°C of the polyimide precursor solution is near neutrality, the imidization of the polyimide precursor solution and the hydrolysis of the polyimide precursor during storage are easily prevented. Therefore, an increase and decrease in viscosity of the polyimide precursor solution during storage is prevented. From the above, it is presumed when the pH of the polyimide precursor solution is within the above numerical range, a polyimide precursor solution having a smaller change in viscosity during storage is easily obtained.

The pH at 50°C of the polyimide precursor solution is measured as follows. 30 g of a sample is added to a 100 mL beaker and the temperature of the solution is brought to 50°C with stirring. After the temperature of the sample reaches 50°C, the pH is measured using a pH meter ("Seven2Go" manufactured by METTLER TOLEDO).

<Method for Producing Polyimide Precursor Solution>

The method for producing the polyimide precursor solution according to the present exemplary embodiment includes: a step of forming a polyimide precursor by polymerizing a tetracarboxylic dianhydride and a diamine compound at a pH of less than 7.5 in the presence of a tertiary amine compound (hereinafter, also referred to as a polyimide precursor forming step); and a step of adjusting the pH of the solution to 6.5 or more and less than 7.5 (hereinafter, also referred to as a pH adjusting step).

(Particle Dispersion Liquid Preparation Step)

When producing the polyimide precursor solution containing particles, a particle dispersion liquid preparation step may be included before the polyimide precursor forming step.

The method of the particle dispersion liquid preparation step is not particularly limited as long as a particle dispersion liquid in which particles are dispersed is obtained.

Examples thereof include a method of weighing particles that are insoluble in the polyimide precursor solution, a solvent or water for a particle dispersion liquid, mixing and stirring the above substances. The method of mixing and

stirring the particles and the solvent or water is not particularly limited. Examples thereof include a method of mixing the particles with the solvent or water under stirring. From the viewpoint of enhancing the dispersibility of the particles, for example, at least one of an ionic surfactant and a nonionic surfactant may be mixed.

The particle dispersion liquid may be a resin particle dispersion liquid in which resin particles are granulated in the solvent or water. When the resin particles are granulated in the solvent or water, a resin particle dispersion liquid formed by polymerizing monomer components in the solvent or water may be prepared. In this case, it may be a dispersion liquid obtained by a known polymerization method. For example, when the resin particles are vinyl resin particles, a known polymerization method (for example, radical polymerization methods such as emulsion polymerization, soap-free emulsion polymerization, suspension polymerization, mini-emulsion polymerization, and micro-emulsion polymerization) may be applied.

For example, when applying the emulsion polymerization method to the production of vinyl resin particles, the vinyl resin particles are obtained by polymerization by adding a monomer such as styrenes and (meth)acrylic acids to water in which a water-soluble polymerization initiator such as potassium persulfate or ammonium persulfate is dissolved, adding, if necessary, a surfactant such as sodium dodecyl sulfate or diphenyloxide disulfonates, and performing heating while stirring.

The particle dispersion liquid preparation step is not limited to the above method, and a commercially available particle dispersion liquid in which the particles are dispersed in a solvent or water may be prepared. When a commercially available particle dispersion liquid is used, an operation such as dilution with an aqueous solvent may be performed depending on the purpose. Further, the aqueous solvent in which the particles are dispersed may be replaced with an organic solvent within a range of not influencing the dispersibility.

When the method for producing the polyimide precursor solution includes the particle dispersion liquid preparation step, the polyimide precursor forming step is preferably carried out by adding a particle dispersion liquid together with the tetracarboxylic dianhydride and the diamine compound. The polyimide precursor forming step may be carried out by adding a tertiary amine compound, a tetracarboxylic dianhydride and a diamine compound to the particle dispersion liquid.

(Polyimide Precursor Forming Step)

The polyimide precursor forming step is a step of forming a polyimide precursor by polymerizing a tetracarboxylic dianhydride and a diamine compound at a pH of less than 7.5 in the presence of a tertiary amine compound.

When polymerizing a tetracarboxylic dianhydride and a diamine compound to form a polyimide precursor, hydrolysis of the polyimide precursor is prevented by carrying out the polyimide precursor forming step under the above conditions. Therefore, a high molecular weight polyimide precursor (for example, a polyimide precursor having a weight average molecular weight of 40,000 or more) is easily obtained.

Here, a pH of less than 7.5 means that the maximum pH value of the reaction solution under a temperature condition (for example, 40°C or higher and 60°C or lower) when forming a polyimide precursor in the polyimide precursor forming step by polymerizing a tetracarboxylic dianhydride and a diamine compound is set to less than 7.5.

The minimum pH value of the reaction solution under the temperature condition (for example, 40°C or higher and 60°C or lower) when forming the polyimide precursor in the polyimide precursor forming step is preferably 5.0 or more.

Examples thereof include a method of producing a polyimide precursor by polymerizing a tetracarboxylic dianhydride and a diamine compound in an aqueous solvent containing a tertiary amine compound and water to obtain a polyimide precursor solution.

Then, the pH of the solution when polymerizing the tetracarboxylic dianhydride and the diamine compound is controlled to be less than 7.5.

Examples of the aqueous solvent containing a tertiary amine compound and water include the same aqueous solvent contained in the polyimide precursor solution according to the present exemplary embodiment.

Here, examples of the method of controlling the pH of the above reaction solution to less than 7.5 include a method in which an aqueous solution containing a tetracarboxylic dianhydride and a diamine compound is heated (for example, 40°C or higher and 60°C or lower) and a tertiary amine compound is added dropwise to the aqueous solution.

The dropping rate of the tertiary amine compound is not particularly limited as long as the dropping rate is adjusted such that the pH of the reaction solution is within the range of less than 7.5 when polymerizing the tetracarboxylic dianhydride and the diamine compound.

From the viewpoint of controlling the pH of the reaction solution to less than 7.5, the polyimide precursor forming step is preferably carried out while measuring the pH of the reaction solution.

The method of adding the tertiary amine compound to the solution containing the tetracarboxylic dianhydride and the diamine compound is not limited to dropping. The tertiary amine compound may be added in plural times.

When adding the tertiary amine compound to the solution containing the tetracarboxylic dianhydride and the diamine compound, the tertiary amine compound may be added as a solution diluted with water or the like.

In the polyimide precursor forming step, the amount of the tertiary amine compound to be added is preferable to make the number of moles of the tertiary amine compound with respect to the acid anhydride group in the tetracarboxylic dianhydride (the number of moles of the tertiary amine compound/the number of moles of the acid anhydride group) be 1.0 or more and 1.4 or less.

(pH Adjusting Step)

The pH adjusting step is a step of adjusting the pH of the solution obtained by the polyimide precursor forming step to 6.5 or more and less than 7.5.

Specifically, the pH adjusting step is a step of adjusting the pH of the solution obtained by the polyimide precursor forming step to obtain a polyimide precursor solution having a pH at 50°C of 6.5 or more and less than 7.5.

Here, when the pH of the solution obtained by the polyimide precursor forming step is in the range of 6.5 or more and less than 7.5, it is not necessary to perform the pH adjusting step.

When the pH is set to the above condition, the liquidity of the obtained polyimide precursor solution tends to be near neutrality, and the hydrolysis of the polyimide precursor during storage is prevented. Therefore, a decrease in viscosity of the polyimide precursor solution during storage is prevented.

Specific examples of the pH adjusting step include a method of adding a tertiary amine compound to the solution obtained by the polyimide precursor forming step such that the pH of the solution is 6.5 or more and less than 7.5.

The tertiary amine compound added in the pH adjusting step may be the same as or different from the tertiary amine compound added in the polyimide precursor forming step.

When adding the tertiary amine compound, the tertiary amine compound may be added as a solution diluted with water or the like.

The amount of the tertiary amine compound to be added in the pH adjusting step is preferable to make the content of the tertiary amine compound contained in the polyimide precursor solution be 1 mass% or more and 50 mass% or less with respect to the total mass of the aqueous solvent contained in the polyimide precursor solution.

<Method for Producing Porous Polyimide Film>

The method for producing a porous polyimide film according to the present exemplary embodiment includes, for example, the following steps.

A first step of coating a polyimide precursor solution containing particles to form a coating film, and then drying the coating film to form a film containing the polyimide precursor and the particles.

A second step of heating the film to imidize the polyimide precursor to form a polyimide film, the second step including a treatment of removing the particles.

In the description of the production method, the same components are designated by the same reference numerals in FIGURE to be referred to. In reference numerals in FIGURE, 31 denotes a substrate, 51 denotes a release layer, 10A denotes a pore, and 10 denotes a porous polyimide film.

(First Step)

In the first step, first, a polyimide precursor solution containing particles (that is, particle-dispersed polyimide precursor solution) is prepared.

Examples of the method for producing the particle-dispersed polyimide precursor solution according to the present exemplary embodiment include the methods described above.

The particle size distribution of the particles in the particle-dispersed polyimide precursor solution is measured as follows. The solution to be measured is diluted and the particle size distribution of the particles in the liquid is measured using a Coulter counter LS 13 (manufactured by Beckman Coulter). Based on the measured particle size distribution, the particle size distribution is measured by drawing a volume cumulative distribution from the small diameter side with respect to the divided particle size range (so-called channel).

Then, in the volume cumulative distribution drawn from the small diameter side, the particle diameter corresponding to the cumulative percentage of 16% is the volume particle diameter D16v, the particle diameter corresponding to the cumulative percentage of 50% is the volume average particle diameter D50v, and the particle diameter corresponding to the cumulative percentage of 84% is the volume particle diameter D84v.

When the particle size distribution of the particles in the particle-dispersed polyimide precursor solution of the present exemplary embodiment is difficult to measure by the above method, it may be measured by a method such as a dynamic light scattering method.

The particle-dispersed polyimide precursor solution obtained by the above method is coated onto a substrate to form a coating film containing the polyimide precursor solution and the particles. Then, the coating film formed on the

substrate is dried to form a film containing the polyimide precursor and the particles.

The substrate on which the particle-dispersed polyimide precursor solution is coated is not particularly limited. Examples thereof include a resin substrate made of polystyrene, polyethylene terephthalate or the like; a glass substrate; a ceramic substrate; a metallic substrate made of iron, stainless steel (SUS) or the like; and a composite material substrate made of a material combining the above materials. If necessary, the substrate may be provided with a release layer by performing a release treatment with, for example, a silicone or fluorine release agent.

The method of coating the particle-dispersed polyimide precursor solution onto the substrate is not particularly limited. Examples thereof include various methods such as a spray coating method, a rotary coating method, a roll coating method, a bar coating method, a slit die coating method, and an inkjet coating method.

The coating amount of the polyimide precursor solution for obtaining the coating film containing the polyimide precursor solution and the particles may be set to an amount to obtain a predetermined film thickness.

After the coating film containing the polyimide precursor solution and the particles is formed, the coating film is dried to form a film containing the polyimide precursor and the particles. Specifically, the film is formed by drying the coating film containing the polyimide precursor solution and the particles by, for example, a method such as heat drying, natural drying, or vacuum drying. More specifically, the film is formed by drying the coating film such that the solvent remaining in the film is 50% or less, preferably 30% or less with respect to the solid content of the film.

(Second Step)

The second step is a step of heating the film containing the polyimide precursor and the particles obtained in the first step to imidize the polyimide precursor to form a polyimide film. The second step includes a treatment of removing particles. After the treatment for removing the particles, a porous polyimide film is obtained.

In the second step, specifically, in the step of forming the polyimide film, the film containing the polyimide precursor and the particles obtained in the first step is heated to progress imidization, and heating is further performed to form a polyimide film that has undergone imidization. As the imidization progresses and the imidization rate increases, the polyimide precursor is difficult to dissolve in an organic solvent.

Then, in the second step, a treatment of removing particles is performed. The particles may be removed in the process of heating the film to imidize the polyimide precursor, or may be removed from the polyimide film after the imidization is completed.

In the present exemplary embodiment, the process of imidizing the polyimide precursor indicates a process in which the film containing the polyimide precursor and the particles obtained in the first step is heated to progress imidization, and in a state before the polyimide film is formed after the imidization is completed.

The treatment of removing particles is preferably carried out when the imidization rate of the polyimide precursor in the polyimide film is 10% or more in the process of imidizing the polyimide precursor in terms of particle removability and the like. When the imidization rate is 10% or more, it is easy to maintain the morphology.

Next, the treatment of removing particles will be described.

First, a treatment of removing resin particles will be described.

Examples of the treatment of removing resin particles include a method of removing the resin particles by heating, a method of removing the resin particles with an organic solvent that dissolves the resin particles, and a method of removing the resin particles by decomposition with a laser or the like. Among these, a method of removing the resin particles by heating and a method of removing the resin particles with an organic solvent that dissolves the resin particles are preferred.

As the method of removing the resin particles by heating, for example, in the process of imidizing the polyimide precursor, the resin particles may be removed by being decomposed by heating for progressing the imidization. In this case, there is no operation of removing the resin particles with a solvent and the number of steps can be reduced.

Examples of the method of removing the resin particles with an organic solvent that dissolves the resin particles include a method of dissolving and removing the resin particles by bringing the resin particles into contact with an organic solvent that dissolves the resin particles (for example, immersing the resin particles in the solvent). Immersion in the solvent in this state is preferred in that the dissolution efficiency of the resin particles is increased.

The organic solvent for dissolving the resin particles and for removing the resin particles is not particularly limited as long as it is an organic solvent that does not dissolve the polyimide film before imidization is completed and the polyimide film after imidization is completed but dissolves the resin particles. Examples thereof include: ethers such as tetrahydrofuran (THF); aromatic substances such as toluene; ketones such as acetone; and esters such as ethyl acetate.

When the resin particles are removed by dissolution and removal to form pores, a general-purpose solvent such as tetrahydrofuran, acetone, toluene, and ethyl acetate is preferred. Water may also be used, depending on the resin particles and the polyimide precursor used.

When the resin particles are removed by heating to form pores, the resin particles are not decomposed at the

drying temperature after coating, but are thermally decomposed at a temperature at which the film of the polyimide precursor is imidized. From this viewpoint, the thermal decomposition start temperature of the resin particles is preferably 150°C or higher and 320°C or lower, more preferably 180°C or higher and 300°C or lower, and still more preferably 200°C or higher and 280°C or lower.

Here, a treatment of removing inorganic particles when the polyimide precursor solution contains inorganic particles will be described.

Examples of the treatment of removing inorganic particles include a method of removing the inorganic particles using a liquid that dissolves the inorganic particles but does not dissolve the polyimide precursor or the polyimide (hereinafter, may be referred to as "particle removing liquid"). The particle removing liquid is selected depending on the inorganic particles used. Examples thereof include: an aqueous solution of acids such as hydrofluoric acid, hydrochloric acid, hydrobromic acid, boric acid, perchloric acid, phosphoric acid, sulfuric acid, nitric acid, acetic acid, trifluoroacetic acid, and citric acid; and an aqueous solution of bases such as sodium hydroxide, potassium hydroxide, tetramethylammonium hydroxide, sodium carbonate, potassium carbonate, ammonia, and the above organic amines. Water alone may be used, depending on the inorganic particles and the polyimide precursor used.

In the second step, the heating method for heating the film obtained in the first step to progress imidization to obtain a polyimide film is not particularly limited. For example, a method of heating in two stages may be mentioned. In the case of heating in two stages, specific heating conditions include the following.

The heating condition in the first stage is preferably a temperature at which the shape of the particles is maintained. Specifically, for example, the heating temperature is preferably in the range of 50°C or higher and 150°C or lower, and preferably in the range of 60°C or higher and 140°C or lower. The heating time is preferably in the range of 10 minutes or longer and 60 minutes or shorter. The higher the heating temperature, the shorter the heating time may be.

Examples of the heating conditions in the second stage include heating at 150°C or higher and 450°C or lower (preferably 200°C or higher and 430°C or lower) for 20 minutes or longer and 120 minutes or shorter. When the heating conditions are set within these ranges, the imidization reaction further progresses, and a polyimide film is obtained. During the heating reaction, the temperature is preferably gradually increased stepwise or at a constant rate before the final temperature of heating is reached.

The heating conditions are not limited to the above two-stage heating method, and for example, a one-stage heating method may be adopted. In the case of the one-stage heating method, for example, the imidization may be completed only under the heating conditions shown in the second stage above.

In the second step, from the viewpoint of increasing the porosity, it is preferable to perform a treatment of exposing the particles to make the particles in an exposed state. In the second step, the treatment of exposing the particles is preferably performed after the process of imidizing the polyimide precursor or after the imidization and before the treatment of removing particles.

In this case, for example, when forming a film on a substrate using a particle-dispersed polyimide precursor solution, the particle-dispersed polyimide precursor solution is coated onto the substrate to form a coating film in which particles are embedded. Next, the coating film is dried to form a film containing a polyimide precursor and particles. The film formed by this method is in a state where particles are embedded. This film may be subjected to the treatment of exposing the particles from the polyimide film in the process of imidizing the polyimide precursor before heating and removing the particles or after the imidization is completed.

In the second step, the treatment of exposing the particles may be performed, for example, when the polyimide film is in the following state.

In a case where the treatment of exposing the particles is performed when the imidization ratio of the polyimide precursor in the polyimide film is less than 10% (that is, the polyimide precursor is dissoluble in a solvent), examples of the treatment of exposing the particles embedded in the polyimide film include a wiping treatment and an immersing treatment in a solvent. The solvent used at this time may be the same as or different from the solvent used for the particle-dispersed polyimide precursor solution of the present exemplary embodiment.

In a case where the treatment of exposing the particles is performed when the imidization rate of the polyimide precursor in the polyimide film is 10% or more (that is, it is difficult to dissolve the polyimide precursor in water or an organic solvent), and when the polyimide film is in a state where imidization is completed, examples include a method of mechanically cutting with tools such as sandpaper to expose the particles, and a method of decomposing with a laser or the like to expose the resin particles when the particles are resin particles.

For example, in the case of mechanical cutting, a part of the particles present in the upper region (that is, the region on the side of the particles away from the substrate) of the particles embedded in the polyimide film is cut together with the polyimide film present on the upper part of the particles, and the cut particles are exposed from the surface of the polyimide film.

Thereafter, the particles are removed from the polyimide film with exposed particles by the above treatment of removing the particles. Then, a porous polyimide film from which the particles have been removed is obtained (see FIGURE).

In the above, the process of producing the porous polyimide film which has been subjected to the treatment of exposing the particles in the second step has been described. However, in order to increase the porosity, the treatment of exposing the particles may be performed in the first step. In this case, in the first step, the particles may be exposed in the process of forming a film by drying after obtaining the coating film to make the particles in an exposed state. By performing the treatment of exposing the particles, the porosity of the porous polyimide film is increased.

For example, in the process of obtaining a coating film containing a polyimide precursor solution and particles and then drying the coating film to form a film containing the polyimide precursor and the particles, as described above, the film is in a state where the polyimide precursor is dissoluble in a solvent. When the film is in this state, the particles can be exposed by, for example, a wiping treatment or an immersing treatment in a solvent. Specifically, when a treatment is performed to expose a particle layer by wiping, for example, with a solvent, the polyimide precursor solution present in a region equal to or larger than the thickness of the particle layer, the polyimide precursor solution present in the region equal to or larger than the thickness of the particle layer is removed. Then, the particles present in the upper region of the particle layer (that is, the region on the side of the particle layer away from the substrate) are exposed from the surface of the film.

In the second step, the substrate for forming the above film used in the first step may be peeled off when the film becomes a dried film, when the polyimide precursor is difficult to dissolve in an organic solvent, or when the imidization is completed and the film is formed.

After the above steps, a porous polyimide film is obtained. Then, the porous polyimide film may be post-processed.

Here, the imidization ratio of the polyimide precursor will be described.

Examples of a partially imidized polyimide precursor include a precursor having a structure having a repeating unit represented by the following general formula (V-1), the following general formula (V-2), and the following general formula (V-3).

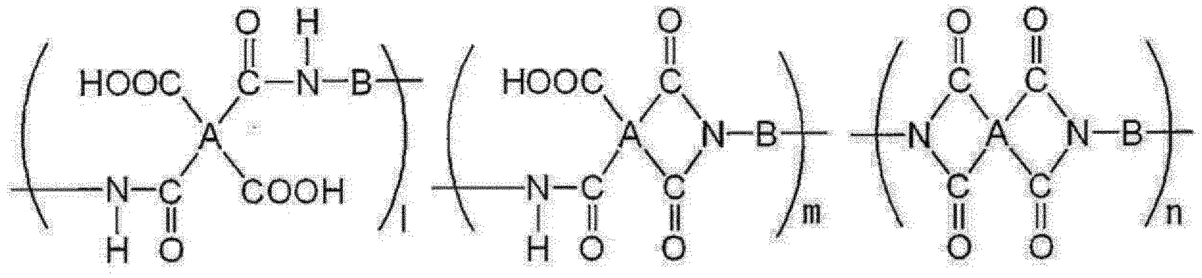

(V-1) (V-2) (V-3)

In the general formula (V-1), the general formula (V-2), and the general formula (V-3), A and B have the same meaning as A and B in the formula (I). l represents an integer of 1 or more, and m and n independently represent an integer of 0 or 1 or more.

The imidization ratio of the polyimide precursor represents the ratio of the number of imide-ring-closed bond parts (2n + m) to the total number of bonds (2l + 2m + 2n) in the bonding part of the polyimide precursor which is a reaction part of the tetracarboxylic dianhydride and the diamine compound. That is, the imidization ratio of the polyimide precursor is indicated by "(2n + m)/(2l + 2m + 2n)".

The imidization ratio of the polyimide precursor (value of "(2n + m)/(2l + 2m + 2n)") is measured by the following method.

-Measurement of Imidization Ratio of Polyimide Precursor-

• Preparation of polyimide precursor sample

(i) A polyimide precursor composition to be measured is coated onto a silicon wafer in a film thickness range of 1 μm or more and 10 μm or less to prepare a coating film sample.
(ii) The coating film sample is immersed in tetrahydrofuran (THF) for 20 minutes to replace the solvent in the coating film sample with tetrahydrofuran (THF). The solvent for immersion is not limited to THF, and may be selected from a solvent that does not dissolve the polyimide precursor and may be miscible with the solvent component contained

in the polyimide precursor composition. Specifically, alcohol solvents such as methanol and ethanol, and ether compounds such as dioxane may be used.
(iii) The coating film sample is taken out from the THF, and $N_2$ gas is sprayed onto the THF adhering to the surface of the coating film sample to remove the THF. A treatment is performed for 12 hours or longer in a range of 5°C or higher and 25°C or lower under a reduced pressure of 10 mmHg or less to dry the coating film sample, so as to prepare a polyimide precursor sample.

• Preparation of 100% imidized standard sample

(iv) In the same manner as in the (i) above, a polyimide precursor composition to be measured is coated onto a silicon wafer to prepare a coating film sample.
(v) The coating film sample is heated at 380°C for 60 minutes to carry out an imidization reaction to prepare a 100% imidized standard sample.

• Measurement and analysis

(vi) Infrared absorption spectra of the 100% imidized standard sample and the polyimide precursor sample are measured using a Fourier transform infrared spectrophotometer (FT-730, manufactured by HORIBA, Ltd.). The ratio I' (100) of the absorption peak (Ab'(1780 $cm^{-1}$)) derived from the imide bond near 1780 $cm^{-1}$ to the absorption peak (Ab'(1500 $cm^{-1}$)) derived from the aromatic ring near 1500 $cm^{-1}$ in the 100% imidized standard sample is determined.
(vii) Similarly, the polyimide precursor sample is measured, and the ratio I (x) of the absorption peak (1780 $cm^{-1}$) derived from the imide bond near 1780 $cm^{-1}$ to the absorption peak (1500 $cm^{-1}$) derived from the aromatic ring near 1500 $cm^{-1}$ is determined.

Then, using the measured absorption peaks I' (100) and I (x), the imidization ratio of the polyimide precursor is calculated based on the following equation.

- Equation:

$$\text{Imidization ratio of polyimide precursor} = I(x)/I'(100)$$

- Equation:

$$I'(100) = (Ab'(1780\ cm^{-1}))/(Ab'(1500\ cm^{-1}))$$

- Equation:

$$I(x) = (Ab(1780\ cm^{-1}))/(Ab(1500\ cm^{-1}))$$

The measurement of the imidization ratio of the polyimide precursor is applied to the measurement of the imidization ratio of an aromatic polyimide precursor. When measuring the imidization ratio of an aliphatic polyimide precursor, a peak derived from a structure that does not change before and after the imidization reaction is used as an internal standard peak instead of the absorption peak of the aromatic ring.

<Method for Producing Non-porous Polyimide Film>

The method for producing a non-porous polyimide film (hereinafter, simply referred to as a polyimide film) according to the present exemplary embodiment includes, for example, the following steps.
A first step of coating a polyimide precursor solution to form a coating film, and then drying the coating film to form a film containing the polyimide precursor.
A second step of heating the film to imidize the polyimide precursor to form a polyimide film.

Here, the first step in the method for producing a polyimide film is the same as the first step included in the method for producing a porous polyimide film except that "a polyimide precursor solution containing no particles" is used instead of "the polyimide precursor solution containing particles".

In addition, the second step in the method for producing a polyimide film is the same as the second step included in the method for producing a porous polyimide film except that the treatment of removing particles is not included.

<Polyimide Film and Porous Polyimide Film>

(Film Properties)

-Film Thickness-

The average film thickness of the polyimide film and the porous polyimide film is not particularly limited, and is preferably 15 μm or more and 500 μm or less.

-Pore-

It is preferable that the pore of the porous polyimide film has a spherical shape. In the present exemplary embodiment, the "spherical shape" of the pore includes both a spherical shape and a substantially spherical shape (that is, a shape close to a spherical shape). The "spherical" specifically means that the pore having a ratio major axis/minor axis of major axis to minor axis of 1 or more and 1.5 or less is present in a ratio of 90% or more. The greater the amount of the pore, the greater the ratio of the spherical pore. The pore having a ratio major axis/minor axis of major axis to minor axis of 1 or more and 1.5 or less is preferably 93% or more and 100% or less, and more preferably 95% or more and 100% or less. The closer the ratio of major axis to minor axis is 1, the closer the pore becomes to a spherical shape.

Further, it is preferable that the pores of the porous polyimide film have a continuous shape in which the pores are connected to each other. The pore diameter of the part where the pores are connected to each other is, for example, preferably 1/100 or more and 1/2 or less, more preferably 1/50 or more and 1/3 or less, and still more preferably 1/20 or more and 1/4 or less of the maximum pore diameter. Specifically, the average value of the pore diameter of the part where the pores are connected to each other is preferably 5 nm or more and 1500 nm or less.

The average value of the pore diameter of the pores of the porous polyimide film is not particularly limited, and is preferably in the range of 0.01 μm or more and 2.5 μm or less, more preferably in the range of 0.05 μm or more and 2.0 μm or less, still more preferably in the range of 0.1 μm or more and 1.5 μm or less, and particularly preferably in the range of 0.15 μm or more and 1.0 μm or less.

The pore of the porous polyimide film preferably has a ratio of the maximum diameter to the minimum diameter of the pores, that is, a ratio of the maximum value to the minimum value of the pore diameter, of 1 or more and 2 or less, more preferably 1 or more and 1.9 or less, and still more preferably 1 or more and 1.8 or less. Among this range, the ratio is more preferably close to 1. Within this range, a variation in pore diameter is prevented.

The "ratio of the maximum diameter to the minimum diameter of the pores" is a ratio represented by a value obtained by dividing the maximum diameter of the pore by the minimum diameter of the pore (that is, the maximum value/the minimum value of the pore diameter).

The maximum value, the minimum value, and the average value of the pore diameter, the average value of the pore diameter of the part where the pores are connected to each other, and the major axis and the minor axis of the pore are values observed and measured by a scanning electron microscope (SEM). Specifically, first, a porous polyimide film is cut out and a measurement sample is prepared. Then, the measurement sample is observed and measured by VE SEM manufactured by KEYENCE CORPORATION using image processing software included in the VE SEM as standard. The observation and measurement are performed on 100 pore parts in the cross section of the measurement sample, and the average value, the minimum diameter, the maximum diameter, and the arithmetic average diameter are obtained. When the shape of the pore is not circular, the longest part is the diameter. Then, the major axis and the minor axis of the above pore parts are observed and measured by VE SEM manufactured by KEYENCE CORPORATION using image processing software included in the VE SEM as standard, to calculate the major axis/minor axis ratio.

-Porosity-

The porosity of the porous polyimide film is preferably 30% or more, more preferably 40% or more, and still more preferably 50% or more. The upper limit of the porosity is preferably 90% or less.

When the porosity of the porous polyimide film is 30% or more, a film having a lower dielectric constant may be obtained. In addition, when the porosity is 90% or less, the mechanical strength is easily increased.

(Application of Polyimide Film and Porous Polyimide Film)

Examples of the use of the polyimide film and the porous polyimide film according to the present exemplary embodiment include: battery separators for lithium batteries, etc.; separators for electrolytic capacitors; electrolyte membranes for fuel cells, etc.; battery electrode materials; gas or liquid separation membranes; low dielectric constant materials; and filter membranes.

Examples

Examples will be described below, but the present invention is not limited to these Examples. In the following description, all "parts" and "%" are based on mass unless otherwise specified. Example 5 is not claimed.

<Example 1>

(Preparation of Polyimide Precursor Solution)

-Polyimide Precursor Forming Step-

18.81 g (174.0 mmol) of p-phenylenediamine (hereinafter, also referred to as "PDA") as a diamine compound and 51.19 g (174.0 mmol) of 3,3',4,4'-biphenyltetracarboxylic dianhydride (hereinafter, also referred to as "BPDA") as a tetracarboxylic dianhydride are added to 529.2 g of ion-exchanged water under a nitrogen stream with heating at 50°C and stirring. A mixture of 38.7 g (382 mmol, ratio to the number of moles of acid anhydride groups in BPDA: 1.1 times by mole) of N-methylmorpholine (hereafter, also referred to as "MMO") as a tertiary amine compound and 62.1 g of ion-exchanged water is added under a nitrogen stream at 50°C over 120 minutes with stirring. Then, the reaction solution is further stirred at 50°C to form a polyimide precursor. The maximum pH value of the reaction solution when polymerizing the tetracarboxylic dianhydride and the diamine compound is 7.17. The pH at 50°C of the solution after the completion of the polyimide precursor forming step is as shown in Table 1.

-pH Adjusting Step-

To the solution obtained in the polyimide precursor forming step, a mixture of 14.1 g (139 mmol, ratio to the number of moles of acid anhydride groups in BPDA: 0.4 times by mole) of MMO and 285.9 g of ion-exchanged water is added, thereby obtaining a polyimide precursor solution having a pH at 50°C of 7.15. The solid content concentration of the polyimide precursor solution is 7%.

<Examples 2, 5, 6, 7, 8 and Comparative Examples 2, 3, 4>

A polyimide precursor solution is obtained in the same manner as in Example 1 except that the tertiary amine equivalent in the pH adjusting step is changed as shown in Table 1.

<Examples 3, 9>

A polyimide precursor solution is obtained in the same manner as in Example 1 except that the type of the tertiary amine compound in the polyimide precursor forming step and the type of the tertiary amine compound in the pH adjusting step are changed as shown in Table 1.

<Example 4 and Reference Example 1>

A polyimide precursor solution is obtained in the same manner as in Example 1 except that the tertiary amine equivalent in the polyimide precursor forming step is changed as shown in Table 1 and the pH adjusting step is not performed.

<Comparative Example 1>

A polyimide precursor solution is obtained in the same manner as in Example 1 except that the pH adjusting step is not performed.

<Reference Example 2>

A polyimide precursor solution is obtained in the same manner as in Example 1 except that the type of the tertiary amine compound and the tertiary amine equivalent in the polyimide precursor forming step are changed as shown in Table 1, the mixture containing the tertiary amine compound and water is added all at once without dropping, and the pH adjusting step is not performed.

<Example 10>

A polyimide precursor solution is obtained in the same manner as in Example 1 except that, in the polyimide precursor forming step, the resin particle dispersion liquid described later is added together with the PDA and BPDA in the addition amounts as shown in Table 1.

(Preparation of Resin Particle Dispersion Liquid)

1,000 parts by mass of styrene, 19.8 parts by mass of a surfactant Dowfax2A1 (a 47% solution, manufactured by Dow Chemical Company), and 576 parts by mass of ion-exchanged water are mixed, and the mixture is stirred and emulsified at 1,500 rpm for 30 minutes with a dissolver to prepare a monomeric emulsion liquid. Subsequently, 1.49 parts by mass of Dowfax2A1 (a 47% solution, manufactured by Dow Chemical Company) and 1270 parts by mass of ion-exchanged water are charged into the reaction vessel. After heating to 75°C under a nitrogen stream, 75 parts by mass of the monomeric emulsion liquid is added, and then, a polymerization initiator solution in which 15 parts by mass of ammonium persulfate is dissolved in 98 parts by mass of ion-exchanged water is added dropwise over 10 minutes. After the reaction is carried out for 50 minutes after the dropping, the remaining monomeric emulsion liquid is added dropwise over 120 minutes, and reacted for another 180 minutes. A resin particle dispersion liquid is obtained as a polystyrene particle dispersion liquid whose solid content concentration is adjusted to 30 mass% after cooling. The average particle diameter of the resin particles is 0.22 μm.

<Evaluation>

With respect to the obtained polyimide precursor solution, the weight average molecular weight of the polyimide precursor and the pH at 50°C are measured according to the method described above.

(Storability Evaluation of Polyimide Precursor Solution)

According to the method described above, the viscosity of the polyimide precursor solution after storage at 25°C for 14 days is calculated with respect to the viscosity of the polyimide precursor solution before storage (hereinafter, also referred to as "change rate in viscosity"), and the storability is evaluated based on the following evaluation criteria.

A: the change rate in viscosity is 50% or more and 200% or less
B: the change rate in viscosity is 25% or more and less than 50%, or more than 200% and less than 400%
C: the change rate in viscosity is less than 25% or 400% or more

(Cissing Evaluation)

The polyimide precursor solution is adjusted to a solid content concentration of 4.0% by adding ion-exchanged water, then coated onto a glass substrate having a thickness of 1.0 mm in an area of 10 cm × 10 cm using an applicator, and dried in an oven at 80°C for 30 minutes to obtain a dried film. The gap of the applicator is adjusted such that the average value of the film thickness of the dried film is 30 μm.

The state of the obtained dried film is visually confirmed, and the cissing is evaluated based on the following evaluation criteria.

A: a uniform dried film is obtained.
B: a dried film is obtained, but pinholes are observed in the peripheral liquid flow or in the film.
C: cissing is generated over a wide area, and a dried film cannot be obtained.

(Film Uniformity Evaluation)

The dried film obtained in the cissing evaluation is fired at 110°C for 30 minutes, 180°C for 30 minutes, 220°C

for 30 minutes, 250°C for 30 minutes, 300°C for 30 minutes, and 400°C for 30 minutes while raising the temperature in an oven, to obtain a polyimide film.

The film thickness of the polyimide film after firing is measured at 7 points using a contact type film thickness meter, and the film uniformity is evaluated based on the following evaluation criteria.

A: the minimum value of the film thickness is 0.8 times or more the maximum value of the film thickness
B: the minimum value of the film thickness is 0.6 times or more and less than 0.8 times the maximum value of the film thickness
C: the minimum value of the film thickness is less than 0.6 times the maximum value of the film thickness

[Table 1]

| | | Example 1 | Example 2 | Example 3 | Example 4 | Reference Example 1 | Comparative Example 1 | Comparative Example 2 | Comparative Example 3 |
|---|---|---|---|---|---|---|---|---|---|
| Polyimide precursor forming step | PDA addition amount (mmol) | 174.0 | 174.0 | 174.0 | 174.0 | 174.0 | 174.0 | 174.0 | 174.0 |
| | BPDA addition amount (mmol) | 174.0 | 174.0 | 174.0 | 174.0 | 174.0 | 174.0 | 174.0 | 174.0 |
| | Resin particle dispersion liquid addition amount (g) | 0 | 0 | 0 | 0 | 0 | 0 | 0 | 0 |
| | Type of tertiary amine compound | MMO | MMO | DMZ | MMO | MMO | MMO | MMO | MMO |
| | Tertiary amine equivalent | 1.1 | 1.1 | 1.1 | 1.25 | 1.5 | 1.1 | 1.1 | 1.1 |
| | Addition method of tertiary amine | Dropping | Dropping | Dropping | Dropping | Dropping | Dropping | Dropping | Dropping |
| | Maximum pH in polymerization | 7.17 | 7.17 | 7.19 | 7.4 | 7.81 | 7.17 | 7.17 | 7.17 |
| | pH of solution after polyimide precursor forming step | 6.27 | 6.27 | 6.31 | 6.6 | 7.11 | 6.27 | 6.27 | 6.27 |
| pH adjusting step | Type of tertiary amine compound | MMO | MMO | DMZ | - | - | - | MMO | MMO |
| | Tertiary amine equivalent | 0.4 | 0.9 | 0.4 | 0 | 0 | 0 | 1 | 1.4 |
| Polyimide precursor solution | Weight average molecular weight of polyimide precursor | 51000 | 51000 | 53000 | 44000 | 32000 | 51000 | 51000 | 51000 |
| | pH at 50°C | 7.15 | 7.49 | 7.16 | 6.6 | 7.11 | 6.27 | 7.57 | 7.86 |
| Storability evaluation | Change rate in viscosity (%) | 130 | 78 | 120 | 170 | 160 | 340 | 46 | 24 |
| | Storability evaluation | A | A | A | A | A | B | B | C |
| Cissing evaluation | | A | A | A | A | C | A | B | B |
| Film uniformity evaluation | | A | A | A | A | A | C | A | A |

(continued)

| | | Reference Example 2 | Example 5 | Example 6 | Comparative Example 4 | Example 7 | Example 8 | Example 9 | Example 10 |
|---|---|---|---|---|---|---|---|---|---|
| Polyimide precursor forming step | PDA addition amount (mmol) | 174.0 | 174.0 | 174.0 | 174.0 | 174.0 | 174.0 | 174.0 | 174.0 |
| | BPDA addition amount (mmol) | 174.0 | 174.0 | 174.0 | 174.0 | 174.0 | 174.0 | 174.0 | 174.0 |
| | Resin particle dispersion liquid addition amount (g) | 0 | 0 | 0 | 0 | 0 | 0 | 0 | 350 |
| | Type of tertiary amine compound | DMZ | MMO | MMO | MMO | MMO | MMO | TEA | MMO |
| | Tertiary amine equivalent | 1.25 | 1.1 | 1.1 | 1.1 | 1.1 | 1.1 | 1.1 | 1.1 |
| | Addition method of tertiary amine | At once | Dropping | Dropping | Dropping | Dropping | Dropping | Dropping | Dropping |
| | Maximum pH in polymerization | 8.25 | 7.17 | 7.17 | 7.17 | 7.17 | 7.17 | 7.36 | 7.01 |
| | pH of solution after polyimide precursor forming step | 6.64 | 6.27 | 6.27 | 6.27 | 6.27 | 6.27 | 6.51 | 6.14 |
| pH adjusting step | Type of tertiary amine compound | - | MMO | MMO | MMO | MMO | MMO | TEA | MMO |
| | Tertiary amine equivalent | 0 | 0.95 | 0.15 | 0.1 | 0.2 | 0.7 | 0.4 | 0.4 |
| Polyimide precursor solution | Weight average molecular weight of polyimide precursor | 28000 | 51000 | 51000 | 51000 | 51000 | 51000 | 48000 | 51000 |
| | pH at 50°C | 6.6 | 7.53 | 6.51 | 6.41 | 6.8 | 7.3 | 7.34 | 6.99 |
| Storability evaluation | Change rate in viscosity (%) | 140 | 53 | 200 | 240 | 160 | 100 | 62 | 170 |
| | Storability evaluation | A | A | A | B | A | A | A | A |
| Cissing evaluation | | C | B | A | A | A | A | B | A |
| Film uniformity evaluation | | A | A | B | B | A | A | A | A |

The abbreviations in Table 1 are described below.

- Tertiary amine equivalent: ratio of the number of moles of the tertiary amine compound to the total number of moles of PDA and BPDA
- MMO: N-methylmorpholine
- DMZ: 1,2-dimethylimidazole
- TEA: triethanolamine

From the above results, it can be seen that the polyimide precursor solution of Examples is a polyimide precursor solution having a small change in viscosity during storage.

In addition, from the results of Reference Example 1 and Reference Example 2, it can be seen that a polyimide precursor solution containing a high molecular weight polyimide precursor (for example, a polyimide precursor having a weight average molecular weight of 40,000 or more) has a small change in viscosity during storage, but has a poor result in cissing evaluation, and when the polyimide precursor solution is coated to form a coating film, cissing is likely to be generated in the coating film.

The foregoing description of the exemplary embodiments of the present invention has been provided for the purposes of illustration and description. It is not intended to be exhaustive or to limit the invention to the precise forms disclosed. It is intended that the scope of the invention be defined by the following claims.

## Claims

**1.** A polyimide precursor solution, comprising:

a polyimide precursor having a weight average molecular weight, which is measured in accordance with the description, of 40,000 or more; and
an aqueous solvent containing a tertiary amine compound and water, wherein
the pH at 50°C is 6.5 or more and less than 7.5.

**2.** The polyimide precursor solution according to claim 1, wherein the pH at 50°C is 6.8 or more and 7.2 or less.

**3.** The polyimide precursor solution according to any one of claims 1 to 2, wherein the tertiary amine compound is at least one selected from the group consisting of an N-substituted imidazole compound and an N-substituted morpholine compound.

**4.** The polyimide precursor solution according to claim 3, wherein the N-substituted imidazole compound is a 1,2-dimethylimidazole and the N-substituted morpholine compound is an N-methylmorpholine.

**5.** The polyimide precursor solution according to any one of claims 1 to 4, wherein the viscosity of the polyimide precursor solution after a storage at 25°C for 14 days is 50% or more and 200% or less with respect to the viscosity of the polyimide precursor solution before the storage.

**6.** The polyimide precursor solution according to any one of claims 1 to 5, further comprising:
resin particles.

**7.** A method for producing a polyimide precursor solution, comprising:

forming a polyimide precursor by polymerizing a tetracarboxylic dianhydride and a diamine compound at a pH of less than 7.5 in the presence of a tertiary amine compound to obtain a solution containing the polyimide precursor; and
adjusting the pH of the solution to 6.5 or more and less than 7.5.

**8.** A method for producing a polyimide film, comprising:

coating the polyimide precursor solution according to any one of claims 1 to 5 onto a substrate to form a coating film, and drying the coating film to form a film containing the polyimide precursor; and
heating the film to imidize the polyimide precursor to form the polyimide film.

**9.** A method for producing a porous polyimide film, comprising:

coating the polyimide precursor solution according to claim 6 onto a substrate to form a coating film, and drying the coating film to form a film containing the polyimide precursor and the resin particles; and
heating the film to imidize the polyimide precursor to form a polyimide film, and removing the resin particles.

## Patentansprüche

**1.** Polyimidvorläuferlösung, umfassend:

einen Polyimidvorläufer mit einem Gewichtsmittel des Molekulargewichts, das gemäß der Beschreibung gemessen wird, von 40.000 oder mehr; und
ein wässriges Lösungsmittel, das eine tertiäre Aminverbindung und Wasser enthält, wobei
der pH-Wert bei 50 °C 6,5 oder höher und niedriger als 7,5 ist.

**2.** Polyimidvorläuferlösung nach Anspruch 1, wobei der pH-Wert bei 50 °C 6,8 oder höher und 7,2 oder niedriger ist.

**3.** Polyimidvorläuferlösung nach einem der Ansprüche 1 bis 2, wobei die tertiäre Aminverbindung mindestens eine ist, die aus der Gruppe bestehend aus einer N-substituierten Imidazolverbindung und einer N-substituierten Morpholinverbindung ausgewählt ist.

**4.** Polyimidvorläuferlösung nach Anspruch 3, wobei die N-substituierte Imidazolverbindung ein 1,2-Dimethylimidazol und die N-substituierte Morpholinverbindung ein N-Methylmorpholin ist.

**5.** Polyimidvorläuferlösung nach einem der Ansprüche 1 bis 4, wobei die Viskosität der Polyimidvorläuferlösung nach einer Lagerung bei 25 °C für 14 Tage 50 % oder mehr und 200 % oder weniger bezogen auf die Viskosität der Polyimidvorläuferlösung vor der Lagerung beträgt.

**6.** Polyimidvorläuferlösung nach einem der Ansprüche 1 bis 5, ferner umfassend:
Harzpartikel.

**7.** Verfahren zum Herstellen einer Polyimidvorläuferlösung, umfassend:

Bilden eines Polyimidvorläufers durch Polymerisieren eines Tetracarbonsäuredianhydrids und einer Diaminverbindung bei einem pH-Wert von weniger als 7,5 in Gegenwart einer tertiären Aminverbindung, um eine Lösung zu erhalten, die den Polyimidvorläufer enthält; und
Einstellen des pH-Wertes der Lösung auf 6,5 oder höher und niedriger als 7,5.

**8.** Verfahren zum Herstellen einer Polyimidfolie, umfassend:

Beschichten eines Substrats mit der Polyimidvorläuferlösung nach einem der Ansprüche 1 bis 5, um eine Beschichtungsfolie zu bilden, und Trocknen der Beschichtungsfolie, um eine Folie zu bilden, die den Polyimidvorläufer enthält; und
Erwärmen der Folie, um den Polyimidvorläufer zu imidieren, um die Polyimidfolie zu bilden.

**9.** Verfahren zum Herstellen einer porösen Polyimidfolie, umfassend:

Beschichten eines Substrats mit der Polyimidvorläuferlösung nach Anspruch 6, um eine Beschichtungsfolie zu bilden, und Trocknen der Beschichtungsfolie, um eine Folie zu bilden, die den Polyimidvorläufer und die Harzpartikel enthält; und
Erwärmen der Folie, um den Polyimidvorläufer zu imidieren, um eine Polyimidfolie zu bilden, und Entfernen der Harzpartikel.

## Revendications

**1.** Solution de précurseur de polyimide, comprenant :

un précurseur de polyimide ayant un poids moléculaire moyen en poids, mesuré conformément à la description, de 40 000 ou plus ; et
un solvant aqueux contenant un composé d'amine tertiaire et de l'eau, dans laquelle
le pH à 50 °C est de 6,5 ou plus et inférieur à 7,5.

2. Solution de précurseur de polyimide selon la revendication 1, dans laquelle le pH à 50 °C est de 6,8 ou plus et de 7,2 ou moins.

3. Solution de précurseur de polyimide selon l'une quelconque des revendications 1 et 2, dans laquelle le composé d'amine tertiaire est au moins un composé choisi dans le groupe constitué par un composé d'imidazole N-substitué et un composé de morpholine N-substitué.

4. Solution de précurseur de polyimide selon la revendication 3, dans laquelle le composé d'imidazole N-substitué est un 1,2-diméthylimidazole et le composé de morpholine N-substitué est une N-méthylmorpholine.

5. Solution de précurseur de polyimide selon l'une quelconque des revendications 1 à 4, dans laquelle la viscosité de la solution de précurseur de polyimide après un stockage à 25 °C pendant 14 jours est de 50 % ou plus et de 200 % ou moins par rapport à la viscosité de la solution de précurseur de polyimide avant le stockage.

6. Solution de précurseur de polyimide selon l'une quelconque des revendications 1 à 5, comprenant en outre : des particules de résine.

7. Procédé de production d'une solution de précurseur de polyimide, comprenant :

la formation d'un précurseur de polyimide par polymérisation d'un dianhydride tétracarboxylique et d'un composé de diamine à un pH inférieur à 7,5 en présence d'un composé d'amine tertiaire pour obtenir une solution contenant le précurseur de polyimide ; et
l'ajustement du pH de la solution à 6,5 ou plus et à moins de 7,5.

8. Procédé de production d'un film de polyimide, comprenant :

l'enduction de la solution de précurseur de polyimide selon l'une quelconque des revendications 1 à 5 sur un substrat pour former un film de revêtement, et le séchage du film de revêtement pour former un film contenant le précurseur de polyimide ; et
le chauffage du film pour imidiser le précurseur de polyimide pour former le film de polyimide.

9. Procédé de production d'un film de polyimide poreux, comprenant :

l'enduction de la solution de précurseur de polyimide selon la revendication 6 sur un substrat pour former un film de revêtement, et le séchage du film de revêtement pour former un film contenant le précurseur de polyimide et les particules de résines ; et
le chauffage du film pour imidiser le précurseur de polyimide pour former un film de polyimide et l'élimination des particules de résine.

*FIGURE*

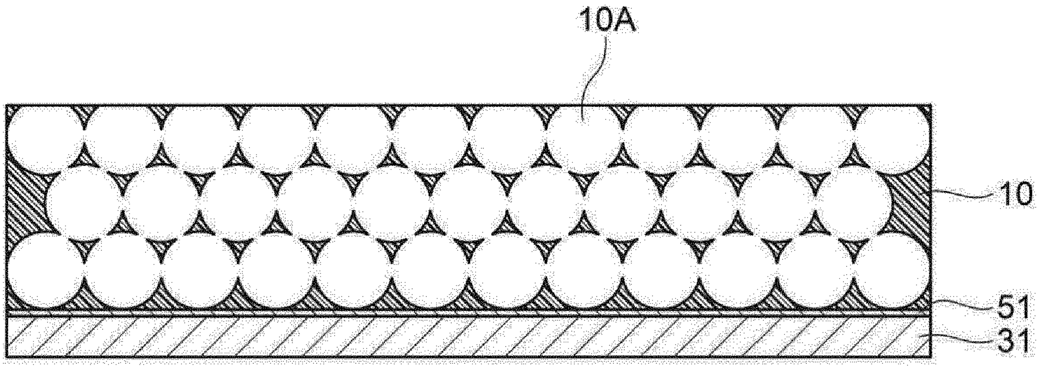

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013144750 A
- JP 2019131747 A
- US 2016185964 A1
- US 2018215873 A1
- US 2021024699 A1
- US 2014213724 A1